# EUROPEAN PATENT SPECIFICATION

(11) **EP 1 753 655 B1**
(45) Date of publication and mention of the grant of the patent: **05.08.2009**
(21) Application number: 05742842.7
(22) Date of filing: 24.05.2005
(51) Int. Cl.: B64C 1/14

(54) **WINDOW FRAME FOR AIRCRAFT**
FENSTERRAHMEN FÜR FLUGZEUG
CADRE DE FENETRE POUR AERONEF

(30) Priority: 24.05.2004 DE 102004025376; 09.08.2004 US 600100 P
(43) Date of publication of application: 21.02.2007
(73) Proprietor: Airbus Deutschland GmbH, 21129 Hamburg (DE)
(72) Inventor: BOLD, Jens, 20255 Hamburg (DE)
(74) Representative: Kopf, Korbinian Paul
(86) International application number: PCT/EP2005/005603
(87) International publication number: WO 2005/115837

(56) References cited:
- WO-A-20/04016844
- US-A- 5 935 475
- US-A1- 2003 168 775

## Description

The invention relates to a window frame for installation in the exterior shell of an aircraft, comprising at least one outer flange, one inner flange, and a vertical flange arranged perpendicular to and between these flanges, wherein the connection with the aircraft structure takes place via the outer flange, and wherein on the inner flange, a window element to be held is attached, which is held via the vertical flange. Further, the invention relates to a method for manufacturing such a window frame.

In most of the aircraft manufactured and in operation today, window frames made of aluminum are used, which comprise a part which is made by forging and truing. The component is organized into a total of three regions: an outer flange, an inner flange, and a vertical flange arranged perpendicular to and between these two flanges. The window frames are typically connected with two rows of rivets over the outer flange with the aircraft structure or with the exterior shell of the aircraft. A window element rests on the inner flange, which, in turn, usually comprises two panes and a sealing arranged therebetween and which is held in its position via a downholder, which is connected with the vertical flange.

In addition to fixing the window element, such a window frame also has the function of absorbing the strain increase, which occurs on the edge of the comparably large cut-out for the window mounted in the load-transferring exterior shell. The outer flange of the window frame thereby serves, on the one hand, for reinforcement of this cut-out and on the other hand, via the outer flange, the frame and the exterior shell are connected to one another by means of rivets. Since the manufacture of the known aluminum window frame typically takes place by means of forging, it is not possible to achieve a cross-sectional distribution of the frame profile that is favorable for the rivet force distribution, since the slant of the flange may amount to a maximum of approximately two angular degrees, in order to enable a simple riveting.The inner flange serves to receive the window element, wherein here a slanting of the mounting of the window is simplified. Simultaneously, the existing load from the interior pressure, which prevails in the passenger cabin, is transferred via this inner flange to the exterior shell of the aircraft.

The vertical flange serves exclusively as a reinforcement rib on the frame, in order to minimize the tension in the exterior shell with the least possible weight. On this vertical flange, also the eye bolts are attached, with which, typically, the downholder or retainer for the window elements are held in their position. Simultaneously, the vertical flange also forms the guide upon mounting of the window element.

US 2003/0168775 disclose manufacturing a fibre reinforced synthetic composite structural element using fibre textile preforms and injection with a curable matrix system.

An object of the present invention is to provide a window frame of the above-described type, which makes possible a considerable weight savings compared to the window frames used today for this application. Simultaneously, the costs for the manufacture of such a window frame should be as low as possible. In addition, by means of the present invention, a simple and cost-effectively performed method for manufacturing such a window frame should be provided.

The invention solves the first object by the window frame according to claim 1, in that it contemplates that such a window frame comprises a fiber-reinforced thermoplastic material. The solution of the further object takes place by means of a method, in which a semifinished part made from webbing and thermoplastic material is made as a quasi-isotropic sheet material and is transformed in a deep-drawing process.

The invention makes possible the use of a window frame, which is made in fiber-composition construction, and which yields a weight savings of approximately 20 percent relative to the aluminum window frames used up to now. In spite of this great weight savings potential, the costs for such a component, compared to a window frame made from an aluminum forged part, do not rise.

At the same time, it is possible to make the fiber window frame according to the present invention with a tolerance of only approximately 0.5 mm with an average wall thickness of 5 mm, which corresponds to a manufacturing tolerance of approximately 10 percent. With aluminum forged frames, in contrast, depending on the manufacturing method, tolerances of approximately 1.5 mm are accepted, which corresponds to a manufacturing tolerance of approximately 30 percent with the same will thickness. Therefore, by means of the present invention, not only the weight fluctuations between the individual window frames are substantially reduced, but also, at the same time, the installation of the frame in an aircraft or the mounting of the window element in the frame is simplified considerably. Finally, further advantages are increased safety as well as a greatly improved thermal insulation of the window frame according to the invention.

Next, the invention will be described in greater detail with reference to one embodiment shown in the accompanying figures. In the figures:
- Fig. 1: shows a window frame in perspective view;
- Fig. 2: shows a detail section through the installation position of a window frame according to Fig. 1;
- Fig. 3: shows the structure of the window frame of Fig. 1 in an exploded view;
- Fig. 4: shows a detail section through a window frame according to Fig. 1;
- Fig. 5: shows a representation of the main directions with a window frame according to Fig. 1; and
- Fig. 6: shows a detail representation of the region in Fig. 5 designated with VIII.

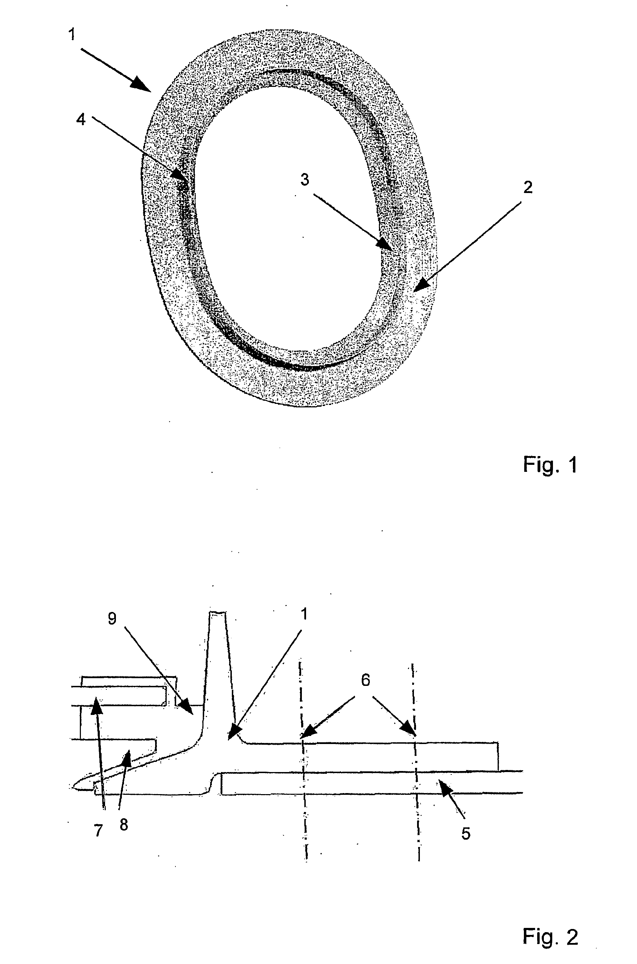

The window frame 1 shown in Fig. 1 is made with a fiber construction and, like the known aluminum forged frames, also has an outer flange 2, an inner flange 3, as well as a vertical flange 4 arranged between these two flanges. In contrast to common aluminum window frames, the outer flange 1 in this case, however, has a uniform circumferential edge, which, again in contrast to the aluminum forged part, has a constant thickness. Fig. 2 shows in a detail section the installation position of such a window frame 1 in the exterior shell 5 of an aircraft. Indicated in this figure are also the rivet positions 6 for the connection of the frame with the exterior shell 5, as well as two window panes 7 and 8, which together with the sealing 9 form the window element.

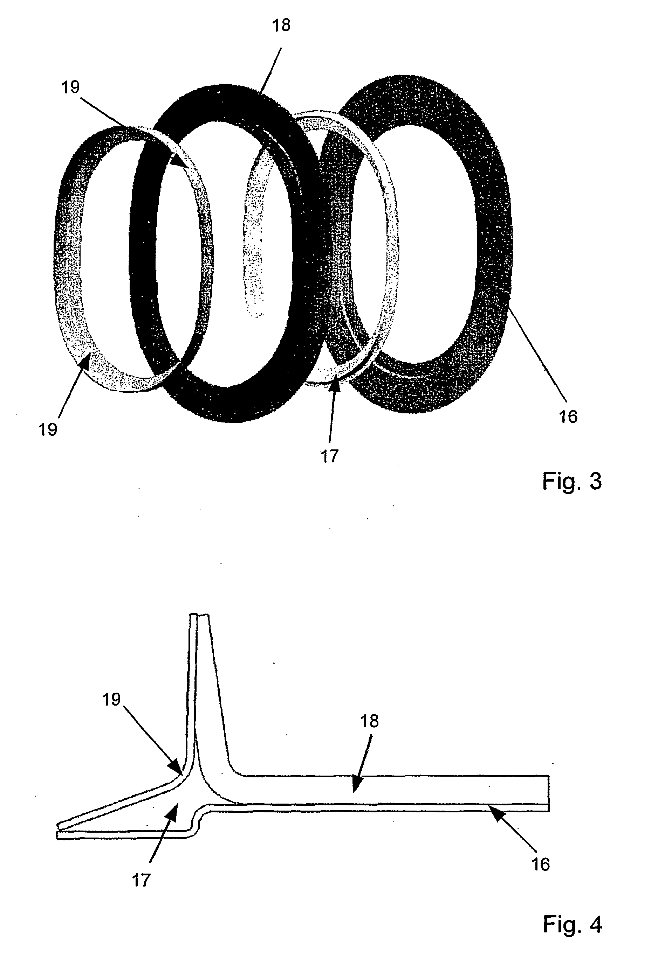

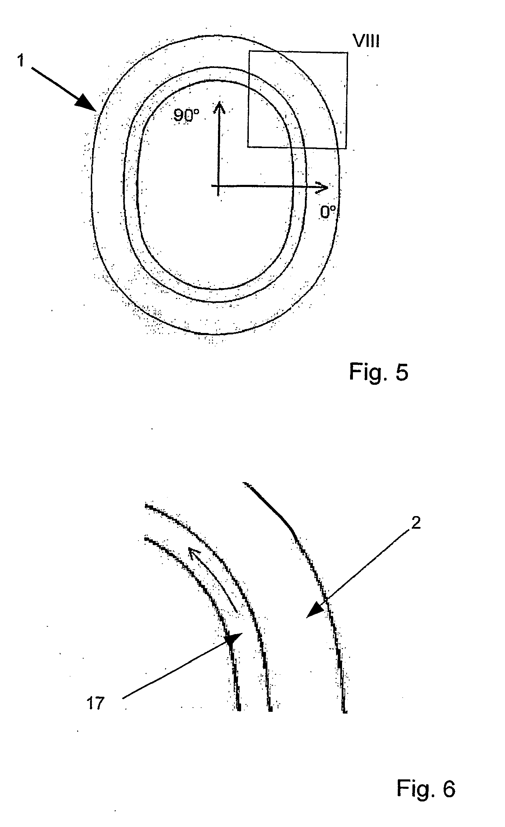

The fiber window frame 1 is manufactured by means of the so-called thermoplastic, deep-drawing technology. With this technology, first, as a primary material, a semifinished part is made from reinforcing webbing and thermoplastic, which is deep-drawn subsequently as a quasi-isotropic sheet material. The semifinished part 10 itself is made in the shape of individual substructural elements 16 to 19, as are shown in the exploded representation in Fig. 3, whereas in Fig. 4, the structure of the complete thermoplastic window frame 1 with the individual substructures 16 to 19 is shown in a sectional representation. The substructures 16 and 19 are, respectively, deep-drawn from a thin plate, whereas the substructure 18 is developed from a thick plate and is machine finished. These three substructures have a quasi-isotropic layer structure, with reference to a fixed coordinate system shown in Fig. 5. The substructure 17, in contrast, is a unidirectional substructure, in which reinforcement fibers run in the circumferential direction of the frame.

The direction of the individual fiber layers is critical for the weight savings achievable with the window frame described here. The principle layer direction with the main direction 0° and 90° is shown in Fig. 5. In this regard, the 0° direction represents the lateral direction and the 90° direction represents the elevation direction of the frame 1. For the 0°-wound semifinished part, that is, the substructure 17, the circumferential direction is critical, shown by the arrow in Fig. 6. The assembly of the individual substructures takes place in the sequence originating from the exploded view of Fig. 5 with thermoplastic welding.

The window frame 1 manufactured in this manner has,an approximately 20 percent weight savings with approximately the same manufacturing costs compared to the common aluminum window frames. Its tolerances are essentially lower than the tolerances of the corresponding aluminum components. At the same time, the frame offers higher safety and better thermal insulation than the common aluminum window frame.

## Claims

1. Window frame (1) for installation in the exterior shell of an aircraft, comprising at least one outer flange (2), at least one inner flange (3), and at least one vertical flange (4) arranged perpendicular to and between the at least one outer flange (2) and the at least one inner flange (3), wherein the at least one outer flange (2) is attachable to the aircraft structure and wherein on the at least one inner flange (3), a window element to be held is attachable, which is held via the at least one vertical flange (4), **characterized in that** the window frame (1) comprises multiple substructures (16-19) welded to one another and being composed of a fiber-reinforced thermoplastic material.

2. Window frame of claim 1, **characterized in that** the window frame (1) has a core (17) comprising a unidirectional-running webbing.

3. Method for manufacturing a window frame (1) of any one of claims 1 or 2, **characterized in that** a semifinished part comprising webbing and thermoplastic material is manufactured as a quasi-isotropic sheet material and is transformed in a deep-draw process to manufacture multiple substructures (16-19) which are subsequently combined by means of thermoplastic welding.

## Patentansprüche

1. Fensterrahmen (1) zum Einbau in die Außenhaut eines Luftfahrzeuges, aufweisend zumindest einen äußeren Flansch (2), zumindest einen inneren Flansch (3) und zumindest einen vertikalen Flansch (4), der senkrecht zu und zwischen dem zumindest einen äußeren Flansch (2) und dem zumindest einen inneren Flansch (3) angeordnet ist, wobei der zumindest eine äußere Flansch (2) an die Flugzeugstruktur anbringbar ist,und wobei an dem zumindest einen inneren Flansch (3) ein zu halterndes Fensterelement anbringbar ist, das über den zumindest einen vertikalen Flansch (4) gehaltert wird, **dadurch gekennzeichnet, dass** der Fensterrahmen (1) mehrere miteinander verschweißte Substrukturen (16-19) umfasst und aus einem faserverstärkten Thermoplastmaterial besteht.

2. Fensterrahmen nach Anspruch 1, **dadurch gekennzeichnet, dass** der Fensterrahmen (1) einen unidirektional verlaufendes Gewebe umfassenden Kern (17) aufweist.

3. Verfahren zur Herstellung eines Fensterrahmens (1) gemäß einem der Ansprüche 1 oder 2, **dadurch gekennzeichnet, dass** ein Gewebe und Thermoplastmaterial umfassendes Halbzeug als quasi-isotropes bahnförmiges Material hergestellt und in einem Tiefziehprozess umgeformt wird, um mehrere Substrukturen (16-19) herzustellen, welche anschließend mittels Thermoplast-Schweißen verbunden werden.

## Revendications

1. Encadrement de hublot (1) pour une installation dans la coque extérieure d'un avion, comportant au moins un rebord extérieur (2), au moins un rebord intérieur (3) et au moins un rebord vertical (4) agencé perpendiculaire aux au moins un rebord extérieur (2) et au moins un rebord intérieur (3) et entre ceux-ci, dans lequel le au moins un rebord extérieur (2) peut être fixé à la structure de l'avion et dans lequel sur le au moins un rebord intérieur (3) peut être fixé un élément de hublot à maintenir, qui est maintenu par l'intermédiaire du au moins un rebord vertical (4), **caractérisé en ce que** l'encadrement de hublot (1) comporte de multiples structures secondaires (16 à 19) soudées les unes aux autres et constituées d'une matière thermoplastique renforcée par des fibres.

2. Encadrement de hublot selon la revendication 1, **caractérisé en ce que** l'encadrement de hublot (1) a une âme (17) comportant un tissage unidirectionnel.

3. Procédé pour fabriquer un encadrement de hublot (1) selon l'une quelconque des revendications 1 ou 2, **caractérisé en ce qu'**une pièce semi-finie comportant un tissage et une matière thermoplastique est fabriquée sous forme de matériau de tôle quasi-isotrope et est transformée pendant un procédé de formage profond afin de fabriquer de multiples structures secondaires (16 à 19) qui sont par la suite combinées au moyen d'un soudage thermoplastique.
